# FASCICULE DE BREVET EUROPEEN

(11) **EP 1 265 771 B1**
(45) Date de publication et mention de la délivrance du brevet: **20.09.2006**
(21) Numéro de dépôt: 01913939.3
(22) Date de dépôt: 06.03.2001
(51) Int. Cl.: B60R 21/02

(54) **ENSEMBLE DE PROTECTION DES MEMBRES INFERIEURS D'UN OCCUPANT D'UN VEHICULE AUTOMOBILE**
ANORDNUNG ZUM SCHÜTZEN DER UNTEREN GLIEDMASSEN EINES KRAFTFAHRZEUGINSASSENS
PROTECTIVE ASSEMBLY FOR A MOTOR VEHICLE PASSENGER'S LOWER LIMBS

(30) Priorité: 10.03.2000 FR 0003132
(43) Date de publication de la demande: 18.12.2002
(73) Titulaire: SNPE Matériaux Energétiques, 75004 Paris (FR); Faurecia Industries, 92100 Boulogne-Billancourt (FR)
(72) Inventeur: BORDE, Patrick, F-25400 Audincourt (FR); D'EMMANUELLE, Laurent, F-83500 La Seyne sur Mer (FR); DUQUESNOY, David, F-25400 Arbouans (FR); LASPESA, Eric, F-83140 Six Fours (FR)
(74) Mandataire: Le Roux, Martine
(86) Numéro de dépôt international: PCT/FR2001/000669
(87) Numéro de publication internationale: WO 2001/068409

(56) Documents cités:
- DE-A- 2 232 726
- DE-C- 3 729 392
- US-A- 4 198 075
- US-A- 4 948 168
- US-A- 5 409 260

## Description

La présente invention se rapporte au domaine de la sécurité automobile et concerne plus particulièrement un ensemble de protection destiné à déployer un coussin de protection servant à bloquer les membres inférieurs d'un occupant d'un véhicule automobile lors d'un accident.

Afin de limiter au maximum le risque d'accidents corporels couru par les occupants d'un véhicule automobile lors d'un choc frontal ou latéral, il a été proposé depuis une trentaine d'année d'incorporer des systèmes générateurs de gaz dans les véhicules permettant de gonfler des coussins de protection aptes à protéger la tête et le thorax des occupants.

Depuis peu, de nombreuses demandes de brevet sont apparues concernant des ensembles de protection inclus dans la partie basse du tableau de bord et conçus pour bloquer les membres inférieurs de l'occupant lors d'une collision de manière à ce que, d'une part, lesdits membres inférieurs soient protégés, et d'autre part, l'occupant ne puisse pas glisser le long du siège sur lequel il est assis et être blessé par la ceinture de sécurité ou encore, le cas échéant, par un coussin de protection gonflable.

Ces différents ensembles de protection peuvent être classés schématiquement en trois catégories. La première catégorie comprend les ensembles de protection faisant appel à un générateur de gaz monté fixement dans la partie basse du tableau de bord et destiné à gonfler un coussin de protection prévu pour venir directement au contact des membres inférieurs de l'occupant. Mais, ces coussins de protection, qui sont situés à proximité d'éléments plastiques ou métalliques, peuvent être endommagés par ces derniers au cours d'une collision. De tels ensembles sont par exemple décrits dans la demande de brevet DE 39 34588 et dans le brevet US 5,458,366.

La deuxième catégorie comprend les ensembles de protection qui renferment un générateur de gaz destiné à gonfler un coussin de protection permettant lui-même d'actionner une plaque prévue pour venir au contact des membres inférieurs de l'occupant. Mais, ces ensembles, qui sont par exemple décrits dans les demandes de brevet EP 0 684 164 et EP 0 820 905, présentent globalement des coûts de fabrication et des encombrements trop élevés.

La troisième catégorie contient les ensembles de protection qui ne font intervenir aucun coussin de protection gonflable. Les brevets US 5,409,260 et US 4,951,963 par exemple divulguent des ensembles de protection incluant une plaque apte à être déplacée en cas de choc de manière à aller à la rencontre des membres inférieurs de l'occupant, cette plaque pouvant être actionnée par voie pneumatique ou par voie mécanique. Mais, le déploiement maximal de la plaque devant être réalisé dans la dizaine de millisecondes suivant la collision, il en découle que la mise en vitesse de ladite plaque dans le sens opposé à celle des membres inférieurs durant ce laps de temps est réalisée de façon extrêmement brutale et la plaque est alors susceptible de blesser les membres inférieurs de l'occupant si ces derniers percutent ladite plaque avant qu'elle ne soit totalement déployée.

Enfin on peut citer le brevet DE 22 32 726 qui divulgue un dispositif de sécurité qui comprend un actionneur pyrotechnique relié à un organe de protection, tous deux étant destinés à être incorporés soit dans une porte du véhicule de façon à protéger l'occupant contre les chocs latéraux, soit dans la partie supérieure du véhicule de façon à protéger la tête de l'occupant. Plus précisément, l'actionneur est directement relié à l'organe de protection et il est apte, en fonctionnement, à provoquer le déplacement minime de l'organe de protection de manière à ce que celui-ci vienne au contact de la partie du corps de l'occupant à protéger, ce déplacement minime étant suffisant dans le type d'applications envisagé.

L'homme du métier est donc toujours à la recherche d'un ensemble de protection des membres inférieurs d'un occupant permettant de pallier les différents problèmes précédemment évoqués.

L'invention a pour but de répondre à cette attente et concerne un ensemble de protection des membres inférieurs d'un occupant d'un véhicule automobile comprenant un dispositif actionneur relié au véhicule et contenant un ensemble pyrotechnique composé d'un chargement pyrotechnique et d'un dispositif d'allumage, ledit dispositif actionneur apte à provoquer le déplacement d'un moyen de coulissement qui est relié à un système de protection destiné à passer d'une position effacée de stockage à une position de protection, ledit système de protection comprenant un coussin de protection amortissant monté sur un arbre qui est relié au véhicule ; le dispositif actionneur étant constitué à partir d'un vérin pyrotechnique linéaire de traction et le moyen de coulissement présentant une première extrémité reliée à une pièce mobile logée dans ledit vérin et une seconde extrémité reliée à l'arbre ; ledit moyen de coulissement provoquant, par son déplacement sous l'effet du déclenchement du dispositif actionneur, la mise en rotation de plus de 90 degrés de l'arbre et du coussin de protection qui lui est rattaché, de façon à accompagner, lors de son déploiement, le mouvement desdits membres inférieurs.

Ainsi, cet ensemble de protection, qui est apte à assurer le déploiement total du coussin de protection dans une période de temps de l'ordre de 10 millisecondes, permet de réduite grandement le risque de blessure des membres inférieurs lorsque, compte tenu du positionnement particulier de l'occupant sur son siège lors de la collision, l'impact a lieu dans les instants précédant le déploiement total du coussin de protection. En effet, celui-ci est animé à ce moment-là, non pas d'un mouvement opposé à celui poursuivi par les membres inférieurs, mais d'un mouvement qui accompagne celui desdits membres inférieurs. Dans tous les cas, le coussin de protection,a pour effet d'absorber une partie de l'énergie induite par l'impact.

Il est à noter qu'un ensemble de protection selon l'invention peut comporter un arbre qui est mobile en rotation sous l'effet du déplacement du moyen de coulissement et auquel est rattaché fixement un coussin de protection. Mais, une variante possible de réalisation peut consister dans l'emploi d'un arbre qui est fixe en permanence et sur lequel est monté un coussin de protection mobile en rotation autour de cet arbre sous l'effet du déplacement du moyen de coulissement. Les autres différences de structure à apporter à l'ensemble de protection pour tenir compte de cette variante ne seront pas systématiquement décrites par la suite.

Avantageusement, le dispositif actionneur est constitué à partir d'un vérin pyrotechnique linéaire de traction et le moyen de coulissement présente, d'une part, une première extrémité reliée à une pièce mobile logée dans ledit vérin, et d'autre part, une seconde extrémité reliée à l'arbre. Dans la variante précédemment évoquée, la seconde extrémité du moyen de coulissement serait alors reliée au coussin de protection.

Il est à noter que, en fonction de la géométrie de l'habitacle, on peut être amené à utiliser un vérin pyrotechnique linéaire de poussée à la place du vérin pyrotechnique linéaire de traction.

Compte tenu de l'augmentation constante du nombre de protections à bord d'un véhicule, un autre objet de l'invention est de proposer un ensemble de protection de taille réduite. Pour cela, le moyen de coulissement est avantageusement rattaché à un élément mobile en rotation qui est relié à l'arbre, cet élément mobile étant de préférence constitué par au moins une biellette. Ainsi, grâce à cet élément mobile, le déplacement du moyen de coulissement se traduit au niveau de l'arbre et donc du coussin de protection par une mise en rotation de grande amplitude qui fait passer ce dernier d'une position de stockage très effacée à une position de protection maximale, cette rotation étant avantageusement supérieure à 90 degrés.

Avantageusement, le dispositif actionneur ainsi que l'élément mobile sont rattachés à une armature fixe.

Selon une première variante préférée de réalisation de l'invention, le moyen de coulissement est constitué par une tige rigide et le dispositif actionneur est apte à osciller autour d'un axe de rotation.

Selon une seconde variante préférée de réalisation de l'invention, le moyen de coulissement est constitué par un câble souple.

Avantageusement, le dispositif actionneur est situé dans un plan perpendiculaire à l'arbre.

Un ensemble de protection selon l'invention peut également comprendre un dispositif de freinage qui est apte à provoquer la diminution rapide de la vitesse du coussin de protection en fin de fonctionnement. Ce dispositif permet alors de réduire grandement la probabilité pour le coussin de protection de rebondir en fin de fonctionnement. Ce dispositif de freinage peut être par exemple réalisé à l'aide d'une première pièce métallique qui est rattachée au dispositif actionneur et qui sert de butée à une seconde pièce métallique montée sur le moyen de coulissement. La première pièce métallique est de préférence en forme de cloche et la seconde pièce métallique est de préférence constituée par un écrou solidarisé sur le moyen de coulissement.

Un ensemble selon l'invention peut aussi renfermer un dispositif de blocage destiné à bloquer le coussin de protection lorsqu'il est totalement déployé. Plusieurs exemples de réalisation de ce dispositif de blocage seront développés plus loin dans la présente demande de brevet. Ce dispositif peut d'ailleurs avoir pour effet de compléter l'action du dispositif de freinage.

Préférentiellement, le coussin de protection est réalisé sous la forme d'un corps présentant deux extrémités, chacune d'elles étant fixée à l'arbre au moyen d'une patte de fixation.

Un ensemble de protection selon l'invention, outre le fait qu'il permet de réduire très fortement le risque de blessure lors de l'impact et qu'il n'occupe qu'un volume réduit, présente l'avantage de ne comporter qu'un faible nombre de pièces mécaniques faciles à assembler, ce qui confère donc à cet ensemble de faibles coûts de fabrication.

La présente invention se rapporte également à un dispositif actionneur destiné à être intégré dans un tel ensemble de protection, caractérisé en ce qu'il comprend :
i) un corps dans lequel peut coulisser, en fonctionnement, une pièce mobile à laquelle est rattachée une tige,
ii) un dispositif de freinage qui est apte à provoquer la diminution rapide de la vitesse de déplacement de la pièce mobile en fin de fonctionnement,
iii) un dispositif de blocage destiné à bloquer la pièce mobile en fin fonctionnement.

Selon une première caractéristique de l'invention, ladite tige peut consister en une tige rigide ou en un câble souple.

Avantageusement, le dispositif de freinage est réalisé à l'aide d'une première pièce métallique qui est rattachée au corps et qui sert de butée à une seconde pièce métallique montée sur la tige. La première pièce métallique est préférentiellement réalisée sous la forme d'une cloche et la seconde pièce métallique peut être constituée par un écrou. Dans un tel exemple de réalisation, la cloche étant amenée à se déformer sous l'impact de l'écrou, il est alors possible de configurer ladite cloche et ledit écrou de façon à ce que l'écrou soit maintenu prisonnier de la cloche déformée. Il en découle alors que dans un tel cas, la cloche et l'écrou sont constitutifs à la fois du dispositif de freinage et du dispositif de blocage.

Par ailleurs, le dispositif de blocage peut par exemple être réalisé à l'aide de languettes élastiques portées par la paroi latérale du corps, lesdites languettes élastiques étant destinées à se refermer, en fin de fonctionnement, sur une gorge portée par la pièce mobile.

Ce dispositif actionneur présente donc l'avantage, d'une part, de posséder une pièce mobile dont la vitesse de déplacement est fortement réduite en fin de course, et d'autre part, d'éviter tout mouvement en sens inverse de ladite pièce mobile en fin de fonctionnement.

On décrit ci-après aux figures 1 à 9 un exemple de réalisation de l'invention.
La figure 1 est une vue longitudinale d'un exemple de réalisation d'un ensemble de protection avec omission du coussin de protection, la tige étant, dans cet exemple, fixée dans une pièce mobile elle-même rattachée à la biellette.
La figure 2 est une vue longitudinale de l'ensemble de protection représenté à la figure 1 muni du coussin de protection et avant fonctionnement, une première modification consistant dans le fait que la tige est fixée directement sur la biellette et une seconde modification consistant dans le fait que le dispositif de freinage a été omis.
La figure 3 est une vue longitudinale de l'ensemble de protection représenté à la figure 2 au cours du fonctionnement.
La figure 4 est une vue longitudinale de l'ensemble de protection représenté à la figure 2 en fin de fonctionnement.
La figure 5 est une vue extérieure longitudinale d'un autre exemple de réalisation d'un ensemble de protection avec omission du coussin de protection.
La figure 6 est une vue extérieure axiale de l'ensemble de protection représenté à la figure 5.
La figure 7 est une vue extérieure longitudinale de l'ensemble de protection représenté à la figure 5, la face avant de l'armature ayant été omise, et l'ensemble de protection n'ayant pas encore fonctionné.
La figure 8 représente l'ensemble de protection de la figure 7 au cours du fonctionnement.
La figure 9 représente l'ensemble de protection de la figure 7 en fin de fonctionnement.

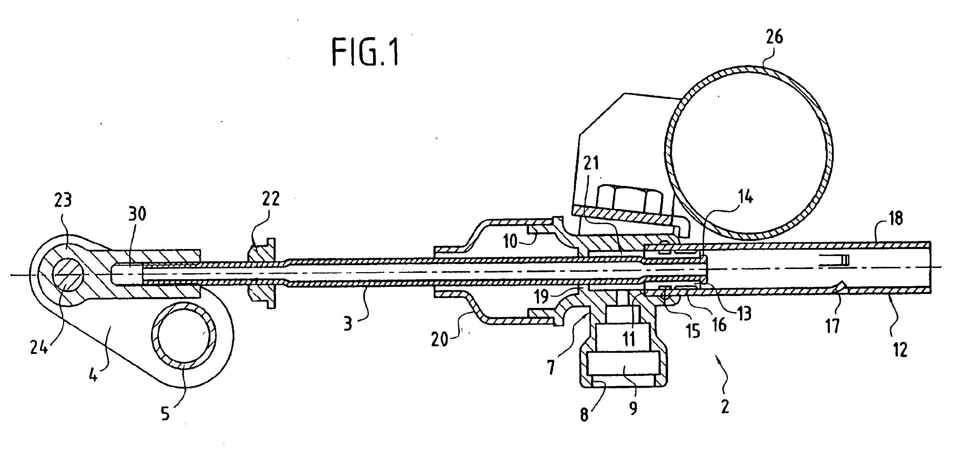

En se référant aux figures 1 à 4 de la présente demande de brevet, on observe qu'un exemple de réalisation d'un ensemble de protection 1 selon l'invention est constitué à l'aide d'un vérin 2 pyrotechnique linéaire de traction qui est relié, par l'entremise d'une tige 3 rigide, à une biellette 4 elle-même montée sur un arbre 5 auquel est associé un coussin de protection 6 en mousse polyuréthanne. Le vérin 2 porte un axe de rotation 27 auquel est rattaché un élément de liaison 28 qui est fixé dans une traverse métallique 26 solidaire du véhicule. De même, l'arbre 5 est rattaché à ladite traverse métallique 26 au moyen d'une ossature métallique 29.

En se référant plus particulièrement à la figure 1, on observe que le vérin 2 est constitué à partir d'une pièce métallique 7 qui présente, d'une part, une ouverture radiale 8 dans laquelle est inséré un ensemble pyrotechnique 9 comprenant un chargement pyrotechnique auquel est associé un dispositif d'allumage, et d'autre part, une première extrémité élargie 10 ouverte et une seconde extrémité ouverte portant en retrait un épaulement externe 11. Un tube 12 métallique, muni d'une paroi latérale 18, de deux extrémités ouvertes et contenant au niveau de sa première extrémité ouverte un piston 13 réalisé sous la forme d'un corps métallique cylindrique possédant un diamètre légèrement inférieur à celui du tube 12, est inséré partiellement puis fixé dans la seconde extrémité ouverte de la pièce métallique 7 de manière à venir en butée contre l'épaulement externe 11. Plus précisément, le piston 13 est doté, d'une part, d'un canal central dans lequel est fixée une première extrémité 14 de la tige 3, et d'autre part, d'un joint annulaire 15 ainsi que d'une gorge annulaire 16. A proximité de sa seconde extrémité ouverte, le tube 12 présente par ailleurs des languettes élastiques 17 convergentes qui sont découpées dans la paroi latérale 18. En retrait de sa première extrémité élargie 10, la pièce métallique 7 porte un épaulement interne 19 qui est traversé par la tige 3, ledit épaulement interne 19 et ladite tige 3 possédant un diamètre quasiment identique. Un joint annulaire non représenté est fixé contre l'épaulement interne 19 et à l'intérieur de la pièce métallique 7 de manière à rendre initialement étanche une chambre de combustion 21 délimitée par ladite pièce métallique 7, le piston 13 et ledit épaulement interne 19. Un élément métallique 20 ayant la forme d'une cloche et présentant, d'une part, une première extrémité munie d'un diamètre voisin de celui de l'extrémité élargie 10 de la pièce métallique 7, et d'autre part, une seconde extrémité de diamètre restreint, est fixée par soudure, au niveau de sa première extrémité, sur ladite extrémité élargie 10. Un écrou 22 de diamètre supérieur à celui présenté par la seconde extrémité de l'élément métallique 20 est soudé sur la tige 3 et cette dernière se termine par une seconde extrémité 30 vissée dans une pièce mobile 23 qui porte un filetage interne. Cette pièce mobile 23 est montée sur un axe de rotation 24 lui-même solidaire de la biellette 4 qui est montée sur l'arbre 5.

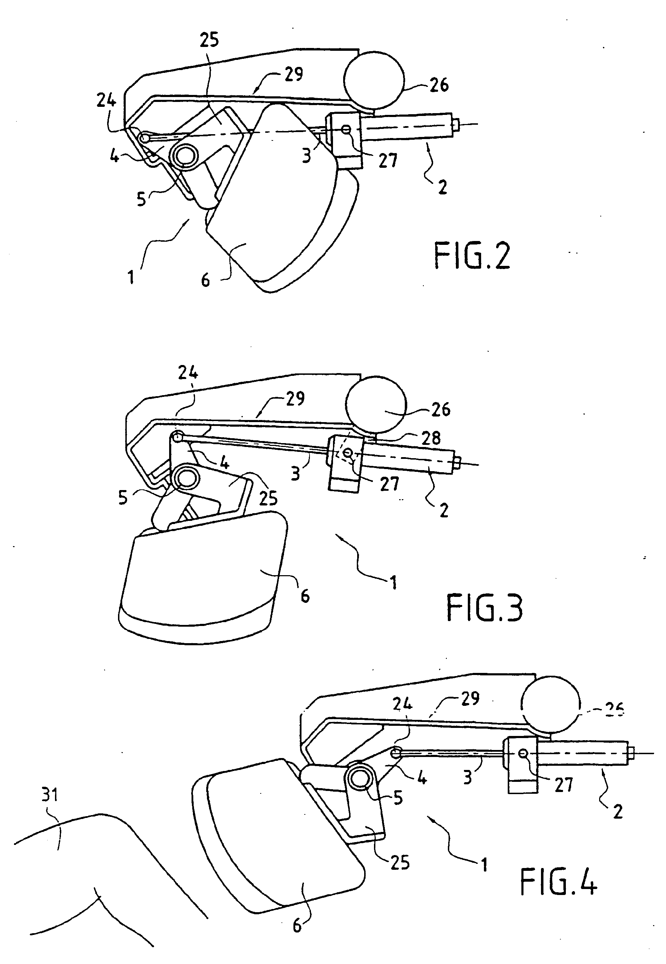

En se reportant plus spécialement aux figures 2 à 4, on observe que le coussin de protection 6 a une forme allongée et présente deux extrémités qui sont chacune rattachées audit arbre 5 au moyen d'une patte de fixation 25. Initialement, le vérin 2 et l'axe de rotation 24 sont situés dans un plan incliné d'environ cinq degrés par rapport au plan horizontal et sont, dans ce plan incliné, perpendiculaires l'un à l'autre.

Lors d'une collision nécessitant le déploiement du coussin de protection 6 afin de protéger efficacement les membres inférieurs 31 de l'occupant du véhicule, le fonctionnement de l'ensemble de protection 1 est le suivant. Un ordre de déclenchement est transmis à l'ensemble pyrotechnique 9 et provoque l'initiation en combustion du chargement pyrotechnique. Celui-ci génère alors des gaz de combustion dans la chambre de combustion 21 qui obligent le piston 13 à se déplacer le long de la paroi latérale 18 du tube 12. La pièce mobile 23 est ainsi amenée à tourner autour de son axe de rotation 24 sous l'effet du déplacement du piston 13 et de la tige 3. Cette pièce mobile 23 entraîne avec elle la biellette 4 qui elle-même provoque la mise en rotation de l'arbre 5 et donc du coussin de protection 6 qui lui est rattaché. Comme on peut le voir plus particulièrement sur la figure 3, les mises en rotation de la pièce mobile 23 et de la biellette 4 sont rendues possibles grâce au mouvement oscillatoire du vérin 2 autour de son axe de rotation 27. Comme on peut le déduire des figures 3 et 4, le coussin de protection 6 est animé d'un mouvement ascensionnel qui accompagne le mouvement des membres inférieurs 31 de l'occupant dès l'instant où il pénètre dans l'habitacle du véhicule. Il en découle donc que même si les membres inférieurs 31 sont amenés à rencontrer le coussin de protection 6 avant son déploiement maximal, cet impact ne sera pas source de blessure comme cela pourrait être le cas si lesdits membres inférieurs 31 et ledit coussin de protection 6 possédaient à ce moment-là des mouvements opposés. En fin de fonctionnement, l'écrou 22 vient percuter la seconde extrémité de diamètre restreint de l'élément métallique 20 qui se déforme sous l'impact, ce qui a pour effet de provoquer la diminution rapide de la vitesse du coussin de protection 6 dans les instants précédant son déploiement maximal. Parallèlement à cela et en fin de fonctionnement, les languettes élastiques 17 convergentes se referment sur la gorge annulaire 16 du piston 13 et permettent de maintenir fixement ce dernier dans cette position. En fonctionnement normal, ce n'est alors qu'à ce moment que les membres inférieurs 31 viennent percuter le coussin de protection 6 qui a pour effet d'absorber une partie de l'énergie induite par l'impact.

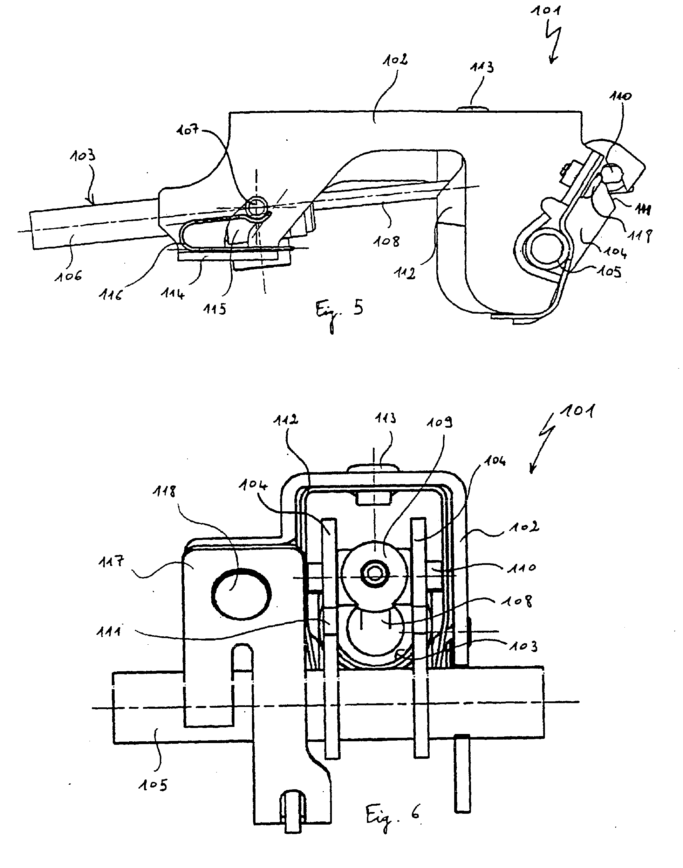

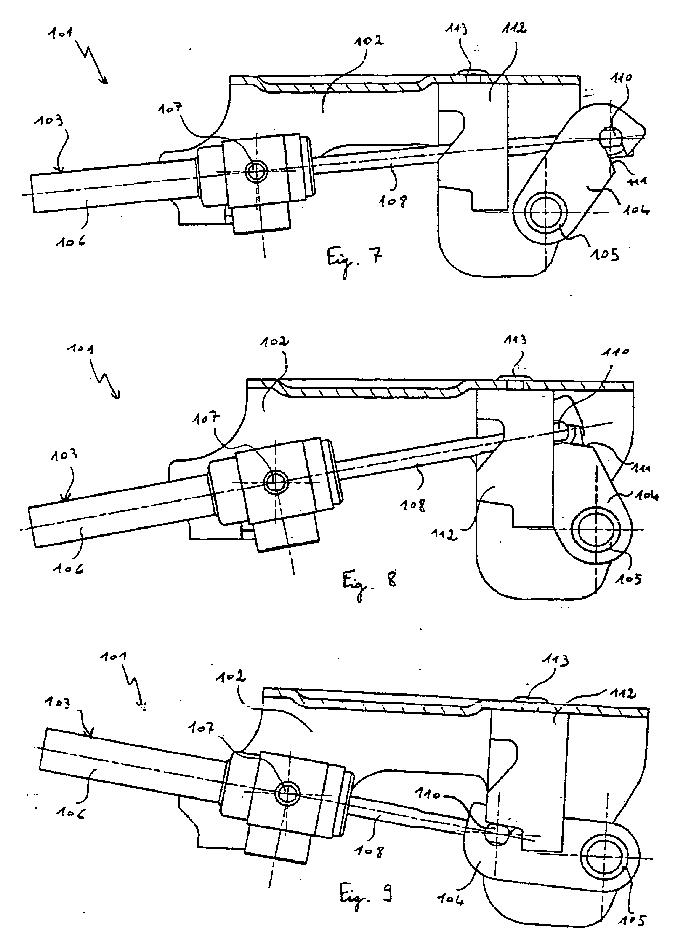

En se référant aux figures 5 à 9, un ensemble de protection 101 selon un autre exemple de réalisation de l'invention, comprend une armature 102, un vérin 103 pyrotechnique linéaire de traction et un moyen d'attache pivotant sous la forme de deux biellettes 104 identiques, plates et parallèles entre elles. Lesdites biellettes 104 sont alésées de façon à recevoir un arbre 105 auquel est rattaché un coussin de protection (non représenté) tel que décrit plus haut. Le vérin 103 présente un corps cylindrique 106 muni de deux protubérances cylindriques 107 diamétralement opposées, et une tige coulissante 108 qui est rattachée au vérin 103 comme décrit dans l'exemple précédent. Une pièce cylindrique creuse rigide 109 est emmanchée dans l'extrémité libre de la tige coulissante 108 du vérin et possède deux ergots 110 latéraux diamétralement opposés comportant chacun deux méplats et deux bords arrondis. Chaque biellette 104 possède une fente 111 sensiblement rectiligne et est agencée au sein de l'ensemble de protection 101 de sorte que les deux ergots 110 de la pièce cylindrique creuse 109 viennent en butée au fond desdites fentes 111 dont l'extrémité est arrondie. Si l'on suppose que la partie amont de l'armature 102 est située du côté du corps cylindrique 106 du vérin 103 et sa partie aval du côté de la tige coulissante 108, l'ensemble de protection 101 possède un dispositif de blocage sous la forme d'une pièce 112 en forme d'étrier présentant un étranglement progressif, ladite pièce 112 étant fixée à la partie aval de l'armature 102 au moyen d'une vis 113. L'armature 102 est constituée par une pièce allongée en acier, ayant une section en U de profondeur variable. La partie amont de l'armature 102 possède une section en U dont l'extrémité de chacune des deux faces en regard l'une de l'autre est repliée pour former un bord 114 à angle droit.

Chacune des deux faces de l'armature 102 possède une fente 115 prenant naissance au niveau du bord replié 114 et se terminant dans chacune des deux faces par une extrémité arrondie. Lesdites fentes 115 sont légèrement incurvées vers la partie aval de l'armature 102. Le vérin 103 est positionné dans l'armature 102 de sorte que chacune de ses deux protubérances 107 se retrouve en butée au fond de chacune desdites fentes 115, ledit vérin 103 étant maintenu dans cette position au moyen d'un organe de compression constitué par une épingle 116 unique, repliée sous contrainte, et placée entre les bords à angle droit 114 de l'armature 102 et les protubérances 107 du vérin 103 qui émergent desdites fentes 115. Ladite épingle 116 présente deux parties en arc de cercle destinées à venir au contact des protubérances 107 cylindriques du corps 106 du vérin 103. L'armature 102 dispose d'une pièce latérale 117 formant une boucle pouvant être serrée au moyen d'une vis 118, ladite boucle 117 enserrant l'arbre 105 qui est à faire pivoter. L'ensemble de protection 101 peut alors être fixé (non représenté), au niveau de son armature 102, à une traverse du véhicule.

Lors d'une collision nécessitant le déploiement du coussin de protection afin de protéger efficacement les membres inférieurs de l'occupant du véhicule, le fonctionnement de l'ensemble de protection 101 est le suivant. Un ordre de déclenchement est transmis à l'ensemble pyrotechnique et provoque l'initiation en combustion du chargement pyrotechnique. Celui-ci génère alors des gaz de combustion qui provoquent la rétractation de la tige coulissante 108. Cette rétractation entraîne la rotation des deux biellettes 104 autour de l'arbre 105 qui est à faire pivoter et auquel est rattaché le coussin de protection. La rotation des biellettes 104 provoque la rotation du vérin 103 dont le corps 106 est bloqué en translation au moyen des protubérances 107 placées en fond de fente 115. En ce référant à la figure 8, les deux ergots 110 de la pièce cylindrique creuse 109 emmanchée dans l'extrémité coulissante 108 du vérin 103, et qui émergent latéralement des deux biellettes 104, pénètrent dans la pièce 112 en forme d'étrier au niveau de sa partie la plus élargie. Le mouvement se poursuit dans l'étrier 112 alors que les forces de frottement s'accroissent en raison de la diminution de la section dudit étrier 112. En ce référant à la figure 9, les ergots 110 finissent par ressortir de l'étrier 112 alors que la pièce cylindrique creuse 109 mise préalablement en compression dans la section réduite de l'étrier 112, se relaxe élastiquement. Cette relaxation élastique permet aux ergots 10 d'émerger latéralement de l'étrier 112 empêchant tout retour en arrière du mouvement. L'accroissement des forces de frottement dans l'étrier 112 se traduit par une phase de freinage de l'arbre 105 qui tourne sur lui-même.

Ainsi, le coussin de protection (non représenté) est animé d'un mouvement ascensionnel qui accompagne le mouvement des membres inférieurs de l'occupant dès l'instant où il pénètre dans l'habitacle du véhicule. Il en découle donc que même si les membres inférieurs sont amenés à rencontrer le coussin de protection avant son déploiement maximal, cet impact ne sera pas source de blessure comme cela pourrait être le cas si lesdits membres inférieurs et ledit coussin de protection possédaient à ce moment-là des trajectoires opposées.

En fonctionnement normal, ce n'est que lorsque les deux ergots 110 ont traversé l'étrier 112 complètement, et que le dispositif de blocage est donc actif, que les membres inférieurs viennent percuter le coussin de protection qui a pour effet d'absorber une partie de l'énergie induite par l'impact.

## Revendications

1. Ensemble de protection (1,101) des membres inférieurs (31) d'un occupant d'un véhicule automobile comprenant un dispositif actionneur (2,103) relié au véhicule et contenant un ensemble pyrotechnique (9) composé d'un chargement pyrotechnique et d'un dispositif d'allumage, ledit dispositif actionneur (2,103) apte à provoquer le déplacement d'un moyen de coulissement (3,108) qui est relié à un système de protection destiné à passer d'une position effacée de stockage à une position de protection, ledit système de protection comprenant un coussin de protection (6) amortissant monté sur un arbre (5,105) qui est relié au véhicule; le dispositif actionneur (2,103) étant constitué à partir d'un vérin pyrotechnique linéaire de traction et le moyen de coulissement (3,108) présentant une première extrémité reliée à une pièce mobile (13) logée dans ledit vérin et une seconde extrémité reliée à l'arbre (5,105); ledit moyen de coulissement (3,108) provoquant, par son déplacement sous l'effet du déclenchement du dispositif actionneur (2,103), la mise en rotation de plus de 90 degrés de l'arbre (5,105) et du coussin de protection qui lui est rattaché, de façon à accompagner, lors de son déploiement, le mouvement desdits membres inférieurs (31).

2. Ensemble de protection (1,101) selon la revendication 1, **caractérisé en ce que** le moyen de coulissement (3,108) est rattaché à un élément mobile (4,104) en rotation qui est relié à l'arbre (5,105).

3. Ensemble de protection (101) selon la revendication 2, **caractérisé en ce que** le dispositif actionneur (103) et l'élément mobile (104) sont rattachés à une armature (102) fixe.

4. Ensemble de protection (1,101) selon la revendication 2 ou 3, **caractérisé en ce que** l'élément mobile (4) est constitué par au moins une biellette.

5. Ensemble de protection (1,101) selon l'une quelconque des revendications 1 à 4, **caractérisé en ce que** le moyen de coulissement (3,108) est constitué par un câble souple.

6. Ensemble de protection (1,101) selon l'une quelconque des revendications 1 à 4, **caractérisé en ce que**:
i) le moyen de coulissement (3,108) est constitué par une tige rigide,
ii) le dispositif actionneur (2,103) est apte à osciller autour d'un axe de rotation (27).

7. Ensemble de protection (1,101) selon l'une quelconque des revendications 1 à 6, **caractérisé en ce que** le dispositif actionneur (2,103) est situé dans un plan perpendiculaire à l'arbre (5,105).

8. Ensemble de protection (1) selon l'une quelconque des revendications précédentes, **caractérisé en ce qu'**il contient un dispositif de freinage (20, 22) qui est apte à provoquer la diminution rapide de la vitesse du coussin de protection (6) en fin de fonctionnement.

9. Ensemble de protection (1) selon la revendication 8, **caractérisé en ce que** le dispositif de freinage (20, 22) est réalisé à l'aide d'une première pièce métallique qui est rattachée au dispositif actionneur (2) et qui sert de butée à une seconde pièce métallique montée sur le moyen de coulissement (3).

10. Ensemble de protection (1) selon la revendication 9, **caractérisé en ce que** la première pièce métallique (20) est en forme de cloche et **en ce que** la seconde pièce métallique (22) est constituée par un écrou solidarisé au moyen de coulissement (3).

11. Ensemble de protection (1,101) selon l'une quelconque des revendications 1 à 10, **caractérisé en ce qu'**il contient un dispositif de blocage (16, 17, 110, 112) destiné à bloquer le coussin de protection (6) lorsqu'il est totalement déployé.

12. Ensemble de protection (101) selon l'une quelconque des revendications 2 à 11, **caractérisé en ce que** :
i) l'élément mobile (104) comprend deux biellettes,
ii) le moyen de coulissement (108) se termine par une pièce cylindrique (109) possédant deux ergots (110) qui assurent le rattachement dudit moyen de coulissement auxdites biellettes,
iii) une pièce (112) en forme d'étrier est prévue pour coopérer avec les deux ergots (110) de façon à ce que ces derniers ne puissent pas repartir en ses inverse après avoir traversés ladite pièce en forme d'étrier.

13. Ensemble de protection (1) selon l'une quelconque des revendications 1 à 11, **caractérisé en ce que** :
i) la pièce mobile (13) est constituée par un piston qui peut coulisser à l'intérieur d'une chambre de combustion (21) sous l'action des gaz libérés par la combustion du chargement pyrotechnique,
ii) le piston est dotée d'une gorge (16),
iii) la chambre de combustion présente un paroi latérale (18) portant des languettes élastiques (17) destinées à se refermer sur ladite gorge en fin de déplacement du piston.

14. Ensemble de protection (1,101) selon l'une quelconque des revendications 1 à 13, **caractérisé en ce que** le coussin de protection (6) est réalisé sous la forme d'un corps présentant deux extrémités, chacune d'elles étant fixée à l'arbre (5) au moyen d'une patte de fixation (25).

15. Ensemble de protection (1) selon l'une quelconque des revendications 1 à 14, **caractérisé en ce que** ledit dispositif actionneur (2) est constitué à partir d'un vérin pyrotechnique linéaire de traction qui comprend :
i) un corps (12) dans lequel peut coulisser, en fonctionnement, une pièce mobile (13) à laquelle est rattachée une tige (3),
ii) un dispositif de freinage (20, 22) qui est apte à provoquer la diminution rapide de la vitesse de déplacement de ladite pièce mobile (13) en fin de fonctionnement,
iii) un dispositif de blocage (16, 17) destiné à bloquer ladite pièce mobile (13) en fin de fonctionnement.

16. Ensemble de protection (1) selon la revendication 15, **caractérisé en ce que** le dispositif de freinage (20, 22) est réalisé à l'aide d'une première pièce métallique qui est rattachée au corps (12) et qui sert de butée à une seconde pièce métallique montée sur la tige (3).

17. Ensemble de protection (1) selon la revendication 16, **caractérisé en ce que** la première pièce métallique (20) est en forme de cloche et **en ce que** la seconde pièce métallique (22) est constituée par un écrou.

18. Ensemble de protection (1) selon l'une quelconque des revendications 15 à 17, **caractérisé en ce que** le corps (12) présente une paroi latérale (18) comportant des languettes élastiques (17) destinées à se refermer sur une gorge (16) portée par la pièce mobile (13) en fin de fonctionnement.

## Claims

1. A protective assembly (1, 101) for protecting the lower limbs (31) of an occupant of a motor vehicle, comprising an actuating device (2, 103) secured to the vehicle, containing a pyrotechnic assembly (9) comprising a pyrotechnic charge with which an ignition device is associated, and able to cause the movement of a sliding means (3, 108) which is connected to a protective system intended to switch from a retracted storage position to a protecting position, said protective system comprising a shock-absorbing protective cushion (6) mounted on a shaft (5, 105) which is secured to the vehicle ; said actuating device (2, 103) being constituted using a linear pyrotechnic tension ram and said sliding means (3, 108) showing a first end connected to a moving part (13) housed in said ram and a second end connected to the shaft (5, 105) ; said sliding means (3, 108) causing the movement in rotation of more than 90° of said shaft (5, 105) and of said protective cushion (6) which is bound to it, thanks to its displacement under the effect of the setting of of the actuating device (2, 103), so as to accompany the movement of said lower limbs (31) during the spreading out of said cushion (6).

2. The protective assembly (1, 101) according to claim 1, **characterized in that** the sliding means (3, 108) is attached to an element (4, 104) that can move in rotation which is connected to the shaft (5, 105).

3. The protective assembly (101) according to claim 2, **characterized in that** the actuating device (103) and the moving element (104) are attached to a fixed armature (102).

4. The protective assembly (1, 101) according to claim 2 or 3, **characterized in that** the moving element (4) consists of at least one link rod.

5. The protective assembly (1, 101) according to any one of claims 1 to 4, **characterized in that** the sliding means (3, 108) consists of a flexible cable.

6. The protective assembly (1, 101) according to any one of claims 1 to 4, **characterized in that** :
i) the sliding means (3, 108) consists of a rigid rod,
ii) the actuating device (2, 103) is able to rock about a rotation spindle (27).

7. The protective assembly (1, 101) according to any one of claims 1 to 6, **characterized in that** the actuating device (2, 103) lies in a plane perpendicular to the shaft (5, 105).

8. The protective assembly (1) according to any one of the preceding claims, **characterized in that** it contains a braking device (20, 22) which is able to cause a sharp decrease in the speed of the protective cushion (6) at the end of operation.

9. The protective assembly (1) according to claim 8, **characterized in that** the braking device (20, 22) is produced using a first metal part which is attached to the actuating device (2) and which acts as a stop for a second metal part mounted on the sliding means (3).

10. The protective assembly (1) according to claim 9, **characterized in that** the first metal part (20) is in the shape of a bell and **in that** the second metal part (22) consists of a nut secured to the sliding means (3).

11. The protective assembly (1, 101) according to any one of claims 1 to 10, **characterized in that** it contains a blocking device (16, 17, 110, 112) intended to block the protective cushion (6) when it is fully spread.

12. The protective assembly (101) according to any one of claims 2 to 11, **characterized in that** :
i) the moving element (104) comprises two link rods,
ii) the sliding means (108) ends by a cylindrical part (109) having two studs (110) which are used to attach said sliding means to said link rods,
iii) a stirrup-shaped part (112) is provided for collaborating with the two studs (110) so that the latter cannot move back in the opposite direction once they have passed through said stirrup-shaped part.

13. The protective assembly (1) according to any one of claims 1 to 11, **characterized in that** :
i) the moving part (13) consists of a piston which can slide inside a combustion chamber (21) under the action of the gases released by the combustion of the pyrotechnic charge,
ii) the piston has a groove (16),
iii) the combustion chamber has a side wall (18) which bears elastic tabs (17) intended to close back up onto said groove at the end of the movement of the piston.

14. The protective assembly (1, 101) according to any one of claims 1 to 13, **characterized in that** the protective cushion (6) is produced in the form of a body having two ends, each of them being fixed to the shaft (5, 105) by means of a fixing lug (25).

15. The protective assembly (1) according to any one of claims 1 to 14, **characterized in that** said actuating device (2) is produced using a linear pyrotechnic tension ram which comprises:
i) a body (12) in which, during operation, a moving part (13) to which a rod (3) is attached can slide,
ii) a braking device (20, 22) which is able to cause a sharp reduction in the speed of travel of the moving part at the end of operation,
iii) a blocking device (16, 17) intended to block the moving part at the end of operation.

16. The protective assembly (1) according to claim 15, **characterized in that** the braking device (20, 22) is produced using a first metal part which is attached to the body (12) and which acts as a stop for a second metal part mounted on the rod (3).

17. The protective assembly (1) according to claim 16, **characterized in that** the first metal part (20) is in the shape of a bell and **in that** the second metal part (22) consists of a nut.

18. The protective assembly (1) according to any one of claims 15 to 17, **characterized in that** the body (12) has a side wall (18) comprising elastic tabs (17) intended to close back up onto a groove (16) that the moving part (13) has, at the end of operation.

## Patentansprüche

1. Schutzanordnung (1, 101) von unteren Gliedmaßen (31) eines Insassen eines Autos, umfassend eine Stellgliedvorrichtung (2, 103), verbunden mit dem Fahrzeug, und welche eine pyrotechnische Anordnung (9) enthält, die aus einer pyrotechnischen Ladung und einer Zündvorrichtung zusammengesetzt ist, wobei die Stellgliedvorrichtung (2, 103) geeignet ist, die Bewegung eines Schiebemittels (3, 108) hervorzurufen, das mit dem Schutzsystem verbunden ist, welches dazu ausgerichtet ist, von einer ungelösten Lagerungsposition zu einer Schutzposition überzugehen, wobei das Schutzsystem ein dämpfendes Schutzpolster (6) umfaßt, welches auf einer Welle (5, 105) angebracht ist, die mit dem Fahrzeug verbunden ist, wobei die Stellgliedvorrichtung (2, 103) aus einem linearen pyrotechnischen Traktionszylinder besteht, und wobei das Schiebemittel (3, 108), welches ein erstes Ende, das mit einem beweglichen Teil (3) verbunden ist, das in dem Zylinder untergebracht ist und ein zweites Ende, das in der Welle (5, 105) untergebracht ist, aufweist, wobei das Schiebemittel (3, 108) durch seine Bewegung unter der Wirkung des Auslösens der Stellgliedvorrichtung (2, 103) das Rotieren um mehr als 90° der Welle (5, 105) und des Schutzpolsters, das an ihr befestigt ist, derart hervorruft, daß es bei seinem Auffalten Lösen die Bewegung der unteren Gliedmaßen (31) begleitet.

2. Schutzvorrichtung (1, 101) nach Anspruch 1, **dadurch gekennzeichnet, daß** das Schiebemittel (3, 108) mit einem beweglichen Element (4, 104) in Rotation verbunden ist, das mit der Welle (5, 105) verbunden ist.

3. Schutzanordnung (101) nach Anspruch 2, **dadurch gekennzeichnet, daß** die Stellgliedvorrichtung (103) und das bewegliche Element (104) an einem festen Gestell (102) befestigt sind.

4. Schutzanordnung (1, 101) nach Anspruch 2 oder 3, **dadurch gekennzeichnet, daß** das bewegliche Element (4) aus wenigstens einer Schubstange besteht.

5. Schutzanordnung (1, 101) nach einem der Ansprüche 1 bis 4, **dadurch gekennzeichnet, daß** das Schiebemittel (3, 108) aus einem biegsamen Kabel besteht.

6. Schutzanordnung (1, 101) nach einem der Ansprüche 1 bis 4, **dadurch gekennzeichnet, daß** :
i) das Schiebemittel (3, 108) aus einer starren Stange besteht,
ii) die Stellgliedvorrichtung (2, 103) geeignet ist, um eine Rotationsachse (27) zu oszillieren.

7. Schutzvorrichtung (1, 101) nach einem der Ansprüche 1 bis 6, **dadurch gekennzeichnet, daß** die Stellgliedvorrichtung (2, 103) in einer senkrechten Ebene zur Welle (5, 105) angeordnet ist.

8. Schutzanordnung (1) nach einem der vorhergehenden Ansprüche, **dadurch gekennzeichnet, daß** sie eine Bremsvorrichtung (20, 22) enthält, die geeignet ist, die schnelle Verminderung der Geschwindigkeit des Schutzpolsters (6) am Betriebsende hervorzurufen.

9. Schutzanordnung (1) nach Anspruch 8, **dadurch gekennzeichnet, daß** die Bremsvorrichtung (20, 22) mit Hilfe eines ersten metallischen Stücks ausgeführt wird, das mit der Stellgliedvorrichtung (2) verbunden ist und als Anschlag bei einem zweiten metallischen Stück dient, das auf dem Schiebemittel (3) angebracht ist.

10. Schutzanordnung (1) nach Anspruch 9, **dadurch gekennzeichnet, daß** das erste metallische Stück (20) in Glockenform ist und **dadurch**, daß das zweite metallische Stück (22) aus einer Mutter besteht, die mit dem Schiebemittel (3) fest verbunden ist.

11. Schutzanordnung (1, 101) nach einem der Ansprüche 1 bis 10, **dadurch gekennzeichnet, daß** sie eine Blockiervorrichtung (16, 17, 110, 112) enthält, die dazu vorgesehen ist, das Schutzpolster (6) zu blockieren, wenn es vollständig entfaltet ist.

12. Schutzanordnung (101) nach einem der Ansprüche 2 bis 11, **dadurch gekennzeichnet, daß**:
i) das bewegliche Element (104) zwei Schubstangen umfaßt,
ii) das Schiebemittel (108) mit einem zylindrischen Stück (109) endet, das zwei Sporne (110) besitzt, die die Befestigung des Schiebemittels an den Schubstangen sicheren,
iii) ein Stück (112) in Form einer Schelle, vorgesehen, um mit den beiden Spornen (110) derart zusammenzuwirken, daß diese letzteren nicht in umgekehrte Richtung zurückkehren können nachdem sie das Stück in Schellenform überquert haben.

13. Schutzanordnung (1) nach einem der Ansprüche 1 bis 11, **dadurch gekennzeichnet, daß**:
i) das bewegliche Teil (13) aus einem Kolben besteht, der in einer Brennkammer (21) unter der Wirkung der durch die Verbrennung der pyrotechnischen Ladung freigesetzten Gase gleiten kann,
ii) der Kolben mit einer Rille (16) versehen ist,
iii) die Brennkammer eine Seitenwand (18) aufweist, die elastische Zungen (17) trägt, die dazu vorgesehen sind, auf der Rille am Ende der Bewegung des Kolbens einzurasten.

14. Schutzanordnung (1, 101) nach einem der Ansprüche 1 bis 13, **dadurch gekennzeichnet, daß** das Schutzpolster (6) in Form eines Körpers ausgeführt ist, der zwei Enden aufweist, wobei jedes von ihnen auf der Welle (5) mit einem Befestigungsschuh (25) fixiert ist.

15. Schutzanordnung (1) nach einem der Ansprüche 1 bis 14, **dadurch gekennzeichnet, daß** die Stellgliedvorrichtung (2) aus einem linearen pyrotechnischen Traktionszylinder besteht, welcher umfaßt:
i) einen Körper (12), in welchem beim Betrieb ein bewegliches Stück (13) gleiten kann, an das eine Stange (3) befestigt ist,
ii) eine Bremsvorrichtung (20, 22), die geeignet ist, die schnelle Verminderung der Bewegungsgeschwindigkeit des beweglichen Teils (30) am Betriebsende hervorzurufen,
iii) eine Blockiervorrichtung (16, 17), die dazu vorgesehen ist, das bewegliche Teil (13) am Betriebsende zu blockieren.

16. Schutzanordnung (1) nach Anspruch 15, **dadurch gekennzeichnet, daß** die Bremsvorrichtung (20, 22) mit Hilfe eines ersten metallischen Stücks ausgeführt ist, das mit dem Körper (12) verbunden ist und welches als Anschlag für ein zweites metallisches Stück dient, das an der Stange (3) angebracht ist.

17. Schutzanordnung (1) nach Anspruch 16, **dadurch gekennzeichnet, daß** das erste metallische Stück (20) in Form einer Schelle ist, und daß das zweite metallische Stück (22) aus einem Haken besteht.

18. Schutzanordnung (1) nach einem der Ansprüche 15 bis 17, **dadurch gekennzeichnet, daß** der Körper (12) eine Seitenwand (18) aufweist, die elastische Zungen (17) umfaßt, die dazu vorgesehen sind, sich am Betriebsende um eine Rille (16) zu schließen, die durch das bewegliche Teil (13) getragen wird.
